# EUROPÄISCHE PATENTSCHRIFT

(11) **EP 4 166 839 B1**
(45) Veröffentlichungstag und Bekanntmachung des Hinweises auf die Patenterteilung: **24.09.2025**
(21) Anmeldenummer: 21202247.9
(22) Anmeldetag: 12.10.2021
(51) Int. Cl.: F16P 3/08

(54) **SICHERHEITSSCHALTERANORDNUNG**
SAFETY CIRCUIT SYSTEM
AGENCEMENT D'INTERRUPTEUR DE SÉCURITÉ

(43) Veröffentlichungstag der Anmeldung: 19.04.2023
(73) Patentinhaber: EUCHNER GmbH + Co. KG, 70771 Leinfelden-Echterdingen (DE)
(72) Erfinder: Häußler, Johannes, 73087 Bad Boll (DE); Stemmer, Florian, 72622 Nürtingen (DE)
(74) Vertreter: Ruckh, Rainer Gerhard

(56) Entgegenhaltungen:
- DE-A1- 10 157 157
- DE-A1- 19 735 859
- US-A- 5 744 767
- US-A1- 2013 020 817
- US-A1- 2019 112 838

## Beschreibung

Die Erfindung betrifft eine Sicherheitsschalteranordnung.

Eine derartige Sicherheitsschalteranordnung umfasst einen Sicherheitsschalter und einen Betätiger, wobei diese Sicherheitsschalteranordnung im Bereich der Sicherheitstechnik eingesetzt wird. Für den Einsatz im Bereich der Sicherheitstechnik, insbesondere im Bereich des Personenschutzes ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer trennenden Schutzeinrichtung wie einer Schutztür als Zugang zu einem Gefahrenbereich abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung befindet, der Betätiger in Form eines Riegels oder dergleichen in Eingriff mit dem Sicherheitsschalter gebracht, indem der Betätiger in eine Verriegelungsstellung am Sicherheitsschalter eingefahren wird, beispielsweise in eine Aussparung des Sicherheitsschalters eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die EP 3 474 303 A1 betrifft einen Betätiger für einen Sicherheitsschalter mit einem Betätigerkopf, der mittels eines Verbindungselements an einem Grundkörper gelagert ist. Der Betätigerkopf weist wenigstens abschnittsweise einen größeren Querschnitt als das Verbindungselement auf. Das Verbindungselement ist in axialer Richtung steif. Der Betätigerkopf ist mittels des Verbindungselements in einer Grundstellung gehalten, in welcher die Längsachse des Verbindungselements in einem Neigungswinkel zur Oberfläche des Grundkörpers verläuft.

Der Betätiger kann quer zu seiner Längsachse ausgelenkt werden. Dadurch wird eine selbsttätige Ausrichtung auf eine im Sicherheitsschalter vorgesehene Verriegelungseinheit ermöglicht.

Ein Problem bei einer derartigen Sicherheitsschalteranordnung besteht darin, dass durch die Auslenkbewegung des Betätigers die Position des Transponders relativ zum RFID-Lesegerät geändert wird, was dazu führen kann, dass der Transponder nicht mehr innerhalb des Lesebereichs des RFID-Lesegeräts liegt, wenn sich der Betätiger in der Verriegelungsstellung befindet. Die Verriegelung des Betätigers kann dann nicht mehr durch Auslesen von Signalen des Transponders kontrolliert werden.

Die US 5 744 767 A betrifft einen Radiusbetätiger für Sicherheitsschalter, bestehend aus einem Halter und einem gegen Federkraft zwischen einer schrägen Anfahrstellung und einer Schalterbetätigungsstellung bewegbar darin gehaltenen Betätigungsbügel. Der Betätigungsbügel ist an einem Ende eines Tragteiles befestigt, dessen anderes Ende in den Halter hineinragt. Der Betätigungsbügel ist gegenüber dem Tragteil um eine Schwenkachse verschwenkbar und in jeder möglichen Verschwenkstellung relativ zum Tragteil festlegbar. Das Tragteil ist mit seinem in den Halter hineinragenden Ende an einer Grundplatte befestigt und gegenüber dieser Grundplatte um eine zweite Schwenkachse verschwenkbar, sowie in jeder möglichen Verschwenkstellung relativ zur Grundplatte festlegbar.

Die DE 197 35 859 A1 bezieht sich auf eine Verriegelungsvorrichtung, insbesondere Sicherheitsverriegelungsvorrichtung, umfassend eine über einen Staubschutz verschließbare Öffnung zum Einführen bzw. Herausziehen eines Betätigers, der seinerseits innerhalb der Vorrichtung entlang eines Verschiebeweges mit insbesondere einem z. B. einen Schalter betätigenden Stößel und/oder einem Verriegelungselement zusammenwirkt. Um ein Verschmutzen des Inneren der Vorrichtung wirksam auszuschließen, wird vorgeschlagen, dass der Staubschutz ein in Richtung des Verschiebeweges des Betätigers kraftbeaufschlagtes die Öffnung bei herausgezogenem Betätiger dicht oder im Wesentlichen dicht verschließendes Verschlusselement ist.

Die US 2013/0020817 A1 betrifft eine Verriegelungseinrichtung mit Zuhaltung für Schutztüren, mit einem Türteil zur Befestigung an einer beweglichen Schutztür und mit einem Rahmenteil zur Befestigung an einem Türgegenstück, wobei das Rahmenteil eine Aufnahme aufweist und das Türteil einen Betätiger aufweist, der der Aufnahme zuführbar ist, wobei das Rahmenteil ferner ein Sperrglied aufweist, das zwischen einer Freigabeposition, bei der der Betätiger selektiv freigegeben werden kann, und einer Blockierposition, bei der der Betätiger selektiv gegenüber der Aufnahme festlegbar ist, verlagerbar ist. Der Betätiger ist über ein elastisches Ausgleichselement an dem Türteil aufgenommen.

Die US 2019/0112838 A1 betrifft einen Betätiger für einen Sicherheitsschalter mit einem Betätigerkopf, der mittels eines Verbindungselements an einem Grundkörper gelagert ist. Der Betätigerkopf weist wenigstens abschnittsweise einen größeren Querschnitt als das Verbindungselement auf. Das Verbindungselement ist in axialer Richtung steif. Der Betätigerkopf ist mittels des Verbindungselements in einer Grundstellung gehalten. In dieser Grundstellung verläuft die Längsachse des Verbindungselements in einem Neigungswinkel zur Oberfläche des Grundkörpers.

Die DE 101 57 157 A1 bezieht sich auf einen Betätiger für eine Verriegelungseinrichtung - mit und ohne Zuhaltung - mit einem eine Einführungsöffnung für den Betätiger aufweisenden Gehäuse, wobei der Betätiger federabgestützt von einer plattenförmigen Halterung aufgenommen ist, die ihrerseits lösbar mit einem eine Nut aufweisenden Profil über zum Beispiel einen sich innerhalb der Nut befindlichen Nutenstein verbunden ist, das seinerseits Abschnitt eines zu sichernden Bereiches ist oder mit diesem verbunden ist. Um den Betätiger mit geringer Bauhöhe ausbilden zu können, ohne Einbußen in der Funktionstüchtigkeit in Kauf zu nehmen, wird vorgeschlagen, dass sich der Betätiger abschnittsweise innerhalb der Nut des Profils erstreckt.

Der Erfindung liegt die Aufgabe zugrunde eine Sicherheitsschalteranordnung der eingangsgenannten Art bereitzustellen, die eine zuverlässige Sicherungsfunktion ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitsschalteranordnung mit einem eine Leseeinheit aufweisenden Sicherheitsschalter und einem Betätiger, welcher einen Transponder und ein beweglich gelagertes Betätigungselement aufweist. Von der Leseeinheit werden Signale aus dem Transponder ausgelesen, wenn sich der Transponder innerhalb eines Lesebereichs der Leseeinheit befindet. Das Betätigungselement ist über ein mechanisches Kopplungsmittel mit dem Transponder verbunden, so dass eine Bewegung der Betätigungselement auf dem Transponder übertragen ist, so dass in einer Verriegelungsstellung des Betätigungselements der Transponder innerhalb des Lesebereichs der Leseeinheit liegt.

Die erfindungsgemäße Sicherheitsschalteranordnung wird im Bereich der Sicherheitstechnik, insbesondere zur Sicherung gefahrbringender Anlagen eingesetzt. Insbesondere kann mit der Sicherheitsschalteranordnung der Zugang zu einem Gefahrenbereich einer Anlage abgesichert werden, wobei der Zugang mit einer trennenden Schutzeinrichtung wie zum Beispiel einer Schutztür abgesichert werden kann.

Der Sicherheitsschalter generiert ein Freigabesignal insbesondere für die Anlage, wenn sich das Betätigungselement des Betätigers in seiner Verriegelungsstellung am Sicherheitsschalter befindet und wenn sich der Transponder innerhalb des Lesebereichs der Leseeinheit des Sicherheitsschalters befindet. Dann können Daten aus dem Transponder mittels der Leseeinheit ausgelesen werden, wodurch das Freigabesignal generiert werden kann.

Der Sicherheitsschalter und der Betätiger sind an unterschiedlichen Anlagenteilen gelagert. Wird mit der Sicherheitsschalteranordnung eine Gefahrenbereichsüberwachung durchgeführt, kann der Betätiger an einer beweglichen trennenden Schutzeinrichtung wie einer Schutztür angeordnet sein, wogegen der Sicherheitsschalter stationär an einem Rahmenteil oder dergleichen angeordnet sein kann.

Für die Freigabe der Anlage wird das Betätigungselement in eine Verriegelungsstellung am Sicherheitsschalter eingefahren. Beispielsweise kann der Sicherheitsschalter eine Aufnahme in Form einer Aussparung aufweisen, in welche das Betätigungselement in seiner Verriegelungsstellung eingeführt ist.

Aufgrund von Montagetoleranzen kann der Sicherheitsschalter nicht exakt auf den Betätiger ausgerichtet sein. Um dennoch das Betätigungselement in seine Verriegelungsstellung überführen zu können, ist dieses beweglich im oder am Betätiger gelagert. Damit kann das Betätigungselement Ausgleichsbewegungen ausführen, damit es in die Verriegelungsstellung eingebracht werden kann, insbesondere in die Aufnahme des Sicherheitsschalters eingeführt werden kann.

Erfindungsgemäß ist das Betätigungselement des Betätigers über ein mechanisches Kopplungsmittel mit dem Transponder des Betätigers verbunden, so dass eine Bewegung des Betätigungselements auf den Transponder übertragen wird, das heißt der Transponder führt eine zur Bewegung des Betätigungselements gleiche, beziehungsweise entsprechende Bewegung aus.

Durch diese Bewegungskopplung ist gewährleistet, dass auch bei einer Ausgleichsbewegung des Betätigungselements der Transponder innerhalb des Lesebereichs der Leseeinheit angeordnet ist, wenn der Betätiger in die Verriegelungsstellung eingebracht ist. Dejustierungen des Transponders relativ zur Leseeinheit bei Ausgleichsbewegungen des Betätigungselements werden somit durch die Bewegungskopplung des Transponders und des Betätigungselements mittels des mechanischen Kopplungsmittels vermieden.

Dadurch ist sichergestellt, dass bei Einbringen der Verriegelungsstellung unabhängig von Ausgleichsbewegungen des Betätigungselements Daten aus dem Transponder von der Leseeinheit ausgelesen werden können und abhängig davon das Freigabesignal generiert wird. Dadurch ist eine hohe Funktionssicherheit der erfindungsgemäßen Sicherheitsschalteranordnung gegeben.

Gemäß einer vorteilhaften Ausführungsform bildet das Kopplungsmittel eine starre Verbindung zwischen dem Transponder und dem Betätigungselement.

Dabei sind vorteilhaft der Transponder und das Betätigungselement fest mit dem Kopplungsmittel verbunden.

Damit wird eine Bewegung des Betätigungselements mittels des Kopplungsmittels direkt und unmittelbar auf den Transponder umgesetzt, das heißt der Transponder führt durch das Kopplungsmittel die gleiche Bewegung wir das Betätigungselement aus.

Gemäß einer konstruktiv vorteilhaften Ausgestaltung weist der Betätiger einen Grundkörper auf, in welchem das Kopplungsmittel lageverstellbar gelagert ist.

Dabei ist insbesondere das Kopplungsmittel mit dem Transponder und dem Betätigungselement verschiebbar und kippbar gelagert.

Somit kann das Betätigungselement zwei unterschiedliche Ausgleichsbewegungen ausführen. Damit können Fehlausrichtungen zwischen dem Sicherheitsschalter und dem Betätiger besonders gut kompensiert werden, um das Betätigungselement sicher in die Verriegelungsstellung einzubringen.

Vorteilhaft ist in einer Wand des Grundkörpers eine Aussparung vorgesehen, durch welche das Betätigungselement geführt ist, wobei das Betätigungselement mit Spiel in der Aussparung geführt ist.

Das Spiel des Betätigungselements in der Aussparung gibt den Bewegungsradius für dessen Ausgleichsbewegungen vor, das heißt die Aussparung begrenzt die Ausgleichsbewegungen. Durch die Größe der Aussparung kann somit applikationsspezifisch eine Dimensionierung der Ausgleichsbewegungen vorgenommen werden. Insbesondere ist die Verschiebebewegung des Kopplungsmittels durch die Größe der Aussparung begrenzt.

Vorteilhaft ist das Kopplungsmittel auf Federn im Grundkörper gelagert.

Dabei ist das Kopplungsmittel gegen die Federkräfte der Federn kippbar.

Durch die Dimensionierung der Federn und durch deren Einbaulage im Grundkörper relativ zu dem Kopplungsmittel kann der Kippwinkelbereich des Betätigungselements vorgegeben werden.

Insbesondere weist der Grundkörper zwei gegenüberliegende in Abstand zueinander verlaufende Wände auf. In einer ersten Wand ist die Aussparung vorgesehen und wobei auf der Innenseite einer zweiten Wand die Federn gelagert sind.

Der Kippwinkelbereich des Betätigungselements ist dann durch die Abstände der Wände in Verbindung mit der Lage des Kopplungsmittels und der Federn vorgebbar.

Gemäß einer vorteilhaften Ausführungsform ist in einem über den Grundkörper hervorstehenden Abschnitt der Transponder gelagert.

Damit behindert der Grundkörper das Auslesen von Daten aus dem Transponder nicht. Dies gilt insbesondere dann, wenn der Grundkörper aus einem metallischen Werkstoff besteht. Ein derartiger in den Lesebereich ragender Grundkörper würde ein Auslesen von Daten aus dem Transponder unmöglich machen.

Gemäß einer ersten vorteilhaften Ausgestaltung ist das Kopplungsmittel von einem Kunststoffteil gebildet.

Damit ist auch der Transponder in einem aus Kunststoff bestehenden Segment des Kopplungsmittels gelagert, was das Auslesen von Daten des Transponders nicht oder nicht nennenswert behindert.

Das Kopplungsmittel kann in diesem Fall in Form eines Kunststoff-Spritzgussteils ausgebildet sein, das rationell in frei vorgebbaren Formen hergestellt werden kann.

Gemäß einer zweiten vorteilhaften Ausgestaltung, ist das Kopplungsmittel von einem Blechteil gebildet.

Das Blechteil ist insbesondere ein Blechstanzteil, welches eine einfache Konstruktion aufweist und kostengünstig hergestellt werden kann.

In diesem Fall bildet der über den Grundkörper hervorstehende Teil des Blechteils eine Ausnehmung aus, welche zur Aufnahme eines Kunststoffelements ausgebildet ist. Der Transponder liegt im Bereich des Kunststoffelements.

Das aus einem metallischen Werkstoff bestehende Blechteil würde das Auslesen von Daten aus dem Transponder mittels der Leseeinheit behindern, wenn dieses den Transponder umgeben würde. Dieses Problem ist durch das im Blechteil gelagerte, den Transponder umgebende Kunststoffelement gelöst, da dieses das Auslesen von Daten aus dem Transponder nicht behindert.

Die Erfindung wird im Folgenden anhand der Zeichnungen erläutert. Es zeigen:
- Figur 1:: Schematische Darstellung der erfindungsgemäßen Sicherheitsschalteranordnung mit einem entfernt zu einem Sicherheitsschalter angeordneten Betätiger.
- Figur 2:: Sicherheitsschalteranordnung gemäß Figur 1 mit dem Betätiger in einer Verriegelungsstellung am Sicherheitsschalter.
- Figur 3:: Erstes Ausführungsbeispiel des erfindungsgemäßen Betätigers.
- Figur 4:: Zweites Ausführungsbeispiel des erfindungsgemäßen Betätigers.

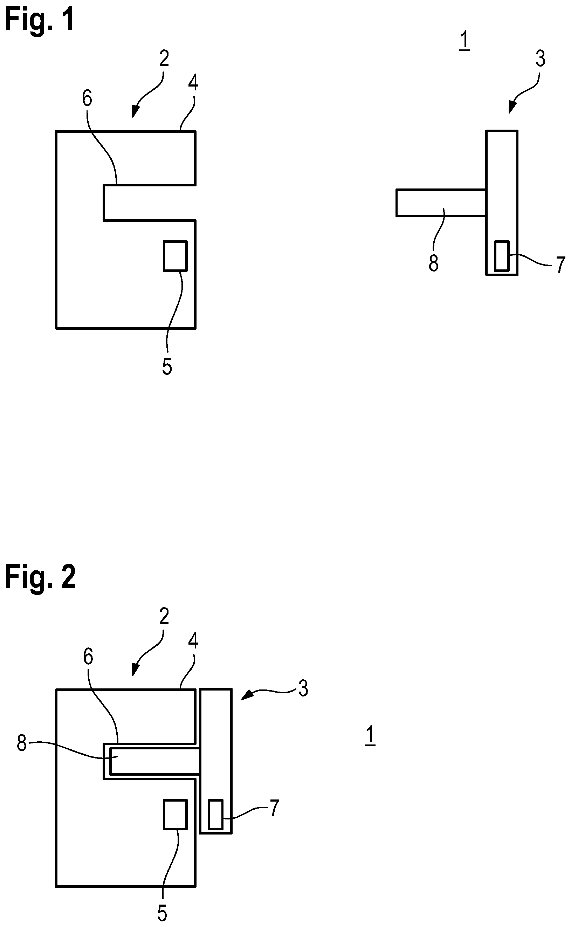

Die Figuren 1 und 2 zeigen schematisch ein Ausführungsbeispiel der erfindungsgemäßen Sicherheitsschalteranordnung 1 mit einem Sicherheitsschalter 2 und einem Betätiger 3. Mit der Sicherheitsschalteranordnung 1 wird ein sicherer Betrieb einer Anlage gewährleistet.

Mit dieser Sicherheitsschalteranordnung 1 erfolgt beispielsweise die Sicherung einer Schutztür als Zugang zu einem Gefahrenbereich. Der Betätiger 3 kann an der Schutztür angeordnet sein, der Sicherheitsschalter 2 kann an einem eine Türöffnung begrenzenden Rahmen angeordnet werden, wobei die Türöffnung mit der Schutztür verschlossen werden kann.

Die Komponenten des Sicherheitsschalters 2 sind in einem Gehäuse 4 integriert. Neben einer nicht dargestellten, vorzugsweise zweikanaligen Prozessorstruktur ist in dem Gehäuse 4 eine Leseeinheit 5 in Form eines RFID-Lesegeräts integriert.

Im Gehäuse 4 befindet sich eine Aufnahme 6 in Form eines Hohlraums, der an einer Seitenwand des Gehäuses 4 ausmündet.

Im Betätiger 3 ist ein Transponder 7 integriert. Weiterhin weist der Betätiger 8 ein von einem Grundkörper 8 hervorstehendes Betätigungselement 9 auf.

Figur 1 zeigt die Sicherheitsschalteranordnung 1 bei geöffneter Schutztür. Demzufolge ist der Betätiger 3 weit von der Sicherheitsschalteranordnung 1 entfernt.

Figur 2 zeigt die Sicherheitsschalteranordnung 1 bei geschlossener Schutztür. Der Betätiger 3 liegt dicht vor dem Sicherheitsschalter 2. Das Betätigungselement 9 ist dann in seine Verriegelungsstellung eingefahren, in welcher das Betätigungselement 9 in die Aufnahme 6 des Sicherheitsschalters 2 ragt. Der Sicherheitsschalter 2 kann eine Zuhaltung aufweisen, die das Betätigungselement 9 in der Verriegelungsstellung mechanisch verriegelt und gegen ein Herauslösen aus der Aufnahme 6 sichert. Eine derartige Zuhaltung weist ein geeignetes nicht dargestelltes Zuhalteelement auf, das mittels Antriebsmitteln verfahrbar ist.

Befindet sich das Betätigungselement 9 wie in Figur 2 dargestellt in seiner Verriegelungsstellung, liegt der Transponder 7 des Betätigers 3 im Lesebereich der Leseeinheit 5. Damit werden mittels der Leseeinheit 5 Daten in Form elektromagnetischer Signale aus dem Transponder 7 ausgelesen. Abhängig hiervon wird mit dem Sicherheitsschalter 2 ein Freigabesignal generiert, mit dem der Betrieb der Anlage freigegeben wird.

Die Sicherheitsschalteranordnung 1 erfüllt somit eine Sicherheitsfunktion derart, dass der Betrieb der Anlage nur bei geschlossener Schutztür freigegeben wird.

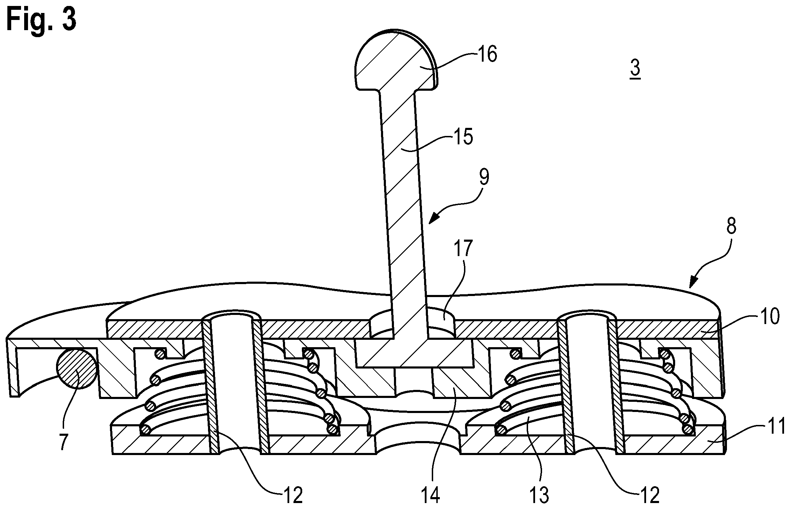

Figur 3 zeigt ein erstes Ausführungsbeispiel des erfindungsgemäßen Betätigers 3. Der Betätiger 3 weist einen Grundkörper mit zwei parallel in Abstand zueinander verlaufenden Wänden 10, 11 auf, die die Ober- und Unterseite eines Betätigergehäuses bilden.

Die Wände 10, 11 sind über zwei rohrförmige, hohlzylindrische Führungselemente 12 verbunden. In diesen Führungselementen 12 können Befestigungsmittel wie Schrauben geführt werden, mit denen der Betätiger 3, 8 an einem Gegenstand wie einer Schutztür befestigt werden kann.

Auf der Innenseite der einen Boden bildenden zweiten Wand 11 sind Federn 13 gelagert, die die Führungssegmente 12 umgeben.

Auf den Federn 13 ist ein mechanisches Kopplungsmittel 14 verschiebbar gelagert. Das Kopplungsmittel 14 ist in einer parallel zu den Ebenen der Wände 10, 11 verlaufenden Ebene verschiebbar. Das Kopplungsmittel 14 besteht im vorliegenden Fall aus einem Kunststoffteil. Der größte Teil des Kopplungsmittels 14 liegt zwischen den Wänden 10, 11.

Das Kopplungsmittel 14 bildet eine starre, mechanische Verbindung zwischen dem Transponder 7 und dem Betätigungselement 9 des Betätigers 3, 8 aus. Der Transponder 7 (von welchen in Figur 3 nur dessen Spule dargestellt ist) und das Betätigungselement 9 sind fest mit dem Kopplungsmittel 14 verbunden. Wie aus Figur 3 ersichtlich, ist der Transponder 7 an einem über den Grundkörper 8a seitlich hervorstehenden Abschnitt des Kopplungsmittels 14 gelagert.

Die Längsachse des Betätigungselements 9 verläuft senkrecht zur Ebene des Kopplungsmittels 14. Das Betätigungselement 9 besteht im vorliegenden Fall aus einem zylindrischen Schaft 15 und einem gegenüber dem Schaft 15 verbreiterten Kopfteil 16 am freien Ende des Schafts 15.

Ist das Betätigungselement 9 in seine Verriegelungsstellung in die Aufnahme 6 des Sicherheitsschalters 2 eingefahren, kann ein Zuhalteelement in einer Sperrstellung am Schaft 15 anliegen oder diesen umschließen. Da das Kopfteil 16 gegenüber dem Schaft 15 verbreitert ist, ist somit das Betätigungselement 9 durch diese Zuhaltung gegen ein Herauslösen aus der Aufnahme 6 gesichert.

Das Betätigungselement 9 durchsetzt eine Aussparung 17 in der die Oberseite des Grundkörpers 8a bildenden Wand 10, wobei der Schaft 15 des Betätigungselements 9 im Bereich der Aussparung 17 liegt. Der Durchmesser der Aussparung 17 ist signifikant größer als der Durchmesser des Schafts 15, so dass das Betätigungselement 9 mit Spiel in der Aussparung 17 geführt ist.

Um auch bei vorhandenen Montagetoleranzen des Sicherheitsschalters 2 und des Betätigers 3 auszugleichen, kann das Kopplungsmittel 14 und damit auch das Betätigungselement 9 Ausgleichsbewegungen ausführen.

Einerseits kann das Kopplungsmittel 14 eine Verschiebebewegung ausführen, die durch die Größe der Aussparung 17 begrenzt ist, das heißt das Kopplungsmittel 14 kann soweit verschoben werden, bis der Schaft 15 des Betätigungselements 9 am Rand der Aussparung 17 anliegt.

Zudem kann das Kopplungsmittel 14 eine Kippbewegung ausführen, in dem das Kopplungsmittel 14 gegen die Federkraft wenigstens einer Feder 13 nach unten gedrückt wird.

Diese Ausgleichsbewegungen des Kopplungsmittels 14 werden direkt und in gleicher Weise auf das Betätigungselement 9 und den Transponder 7 übertragen.

Wird demzufolge eine Ausgleichsbewegung des Betätigungselements 9 bewirkt, um dieses in die Aussparung 17 des Sicherheitsschalters 2 einführen zu können, wird der Transponder 7 über das Kopplungsmittel 14 in gleicher Weise mitbewegt. Dadurch wird erreicht, dass auch bei Ausgleichsbewegungen das Betätigungselement 9 der Transponder 7 des Betätigers 3 immer innerhalb des Lesebereichs der Leseeinheit 5 liegt, wenn das Betätigungselement 9 in seine Verriegelungsstellung in der Aufnahme 6 des Sicherheitsschalters 2 eingefahren ist. Dadurch ist gewährleistet, dass in der Verriegelungsstellung des Betätigungselements 9 Daten des Transponders 7 von der Leseeinheit 5 ausgelesen werden können, was eine Voraussetzung für die Generierung als Freigabesignals ist.

Da der Transponder 7 in einem über den Grundkörper 8a hervorstehenden Abschnitt des Kopplungsmittels 14 gelagert ist, behindert der Grundkörper 8a das Auslesen der Daten aus dem Transponder 7 nicht.

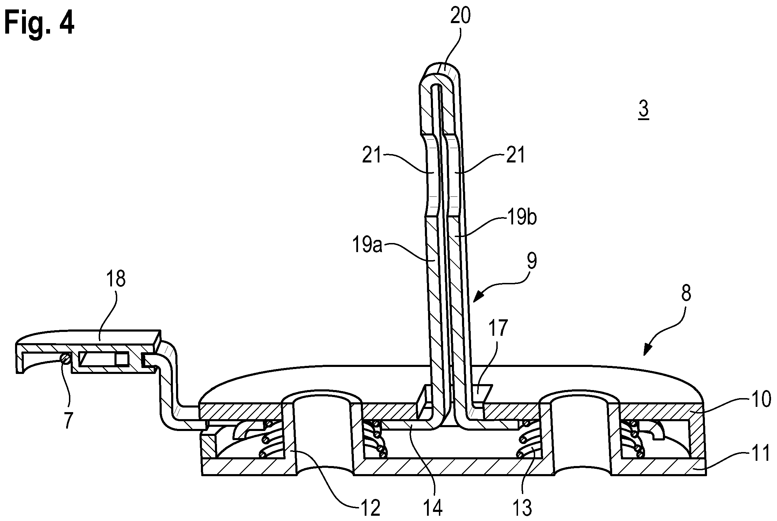

Figur 4 zeigt ein zweites Ausführungsbeispiel des erfindungsgemäßen Betätigers 3. Die Ausführungsform gemäß Figur 4 unterscheidet sich von der Ausführungsform gemäß Figur 3 im Wesentlichen nur hinsichtlich der Ausbildung des Kopplungsmittels 14 und des daran anschließenden Betätigungselements 9. Ansonsten entspricht der Betätiger 3 gemäß Figur 4 hinsichtlich Konstruktion und Funktionsweise der Ausführungsform gemäß Figur 3.

Das Kopplungsmittel 14 besteht bei dem Betätiger 3 gemäß Figur 4 aus einem Blechstanzteil. Der Transponder 7 ist wieder an einem über den Grundkörper 8 seitlich hervorstehenden Abschnitts des Kopplungsmittels 14 gelagert. Dies bildet eine Ausnehmung aus, in welcher ein Kunststoffelement 18 gelagert ist. Der Transponder 7 ist im Bereich des Kunststoffelements 18 gelagert, so dass ein Auslesen von Daten nicht durch das metallische Blechstanzteil des Kopplungsmittels 14 behindert wird.

Das einstückig mit dem Kopplungsmittel 14 ausgebildete Betätigungselement 9 besteht aus zwei parallel verlaufenden Betätigerelementsegmenten 19a, 19b, die an ihren oberen Enden über ein Bogensegment 20 des Blechstanzteils verbunden sind.

In den Betätigerelementsegmenten 19a, 19b befinden sich Bohrungen 21. Ist das Betätigungselement 9 in seine Verriegelungsstellung in der Aufnahme 6 des Sicherheitsschalters 2 eingefahren, kann ein Zuhalteelement durch diese Bohrungen 21 geführt werden.

### Bezugszeichenliste

- (1): Sicherheitsschalteranordnung
- (2): Sicherheitsschalter
- (3): Betätiger
- (4): Gehäuse
- (5): Leseeinheit
- (6): Aufnahme
- (7): Transponder
- (8): Grundkörper
- (9): Betätigungselement
- (10): erste Wand
- (11): zweite Wand
- (12): Führungselement
- (13): Feder
- (14): Kopplungsmittel
- (15): Schaft
- (16): Kopfteil
- (17): Aussparung
- (18): Kunststoffelement
- (19a): Betätigerelementsegment
- (19b): Betätigerelementsegment
- (20): Bogensegment
- (21): Bohrung

## Patentansprüche

1. Sicherheitsschalteranordnung (1) mit einem eine Leseeinheit (5) aufweisenden Sicherheitsschalter (2) und einem Betätiger (3, 8), welcher einen Transponder (7) und ein beweglich gelagertes Betätigungselement (9) aufweist, wobei von der Leseeinheit (5) Signale aus dem Transponder (7) ausgelesen werden, wenn sich der Transponder (7) innerhalb eines Lesebereichs der Leseeinheit (5) befindet, **dadurch gekennzeichnet, dass** das Betätigungselement (9) über ein mechanisches Kopplungsmittel (14) des Betätigers mit dem Transponder (7) verbunden ist, so dass eine Bewegung des Betätigungselements (9) auf den Transponder (7) übertragen ist, so dass in einer Verriegelungsstellung des Betätigungselements (9) der Transponder (7) innerhalb des Lesebereichs der Leseeinheit (5) liegt.

2. Sicherheitsschalteranordnung (1) nach Anspruch 1, **dadurch gekennzeichnet, dass** das Kopplungsmittel (14) eine starre Verbindung zwischen dem Transponder (7) und dem Betätigungselement (9) ausbildet.

3. Sicherheitsschalteranordnung (1) nach einem der Ansprüche 1 oder 2, **dadurch gekennzeichnet, dass** der Transponder (7) und das Betätigungselement (9) fest mit dem Kopplungsmittel (14) verbunden sind.

4. Sicherheitsschalteranordnung (1) nach einem der Ansprüche 1 - 3, **dadurch gekennzeichnet, dass** in der Verriegelungsstellung das Betätigungselement (9) in eine Aufnahme (6) des Sicherheitsschalters (2) eingefahren ist.

5. Sicherheitsschalteranordnung (1) nach einem der Ansprüche 1 - 4, **dadurch gekennzeichnet, dass** der Betätiger (3, 8) einen Grundkörper (8a) aufweist, in welchem das Kopplungsmittel (14) lageverstellbar gelagert ist.

6. Sicherheitsschalteranordnung (1) nach Anspruch 5, **dadurch gekennzeichnet, dass** in einer Wand (10, 11) des Grundkörpers (8a) eine Aussparung (17) vorgesehen ist, durch welche das Betätigungselement (9) geführt ist, wobei das Betätigungselement (9) mit Spiel in der Aussparung (17) geführt ist.

7. Sicherheitsschalteranordnung (1) nach einem der Ansprüche 5 oder 6, **dadurch gekennzeichnet, dass** das Kopplungsmittel (14) mit dem Transponder (7) und dem Betätigungselement (9) verschiebbar und kippbar gelagert ist.

8. Sicherheitsschalteranordnung (1) nach Anspruch 6 und 7, **dadurch gekennzeichnet, dass** die Verschiebebewegung des Kopplungsmittels (14) durch die Größe der Aussparung (17) begrenzt ist.

9. Sicherheitsschalteranordnung (1) nach einem der Ansprüche 5 - 8, **dadurch gekennzeichnet, dass** das Kopplungsmittel (14) auf Federn (13) im Grundkörper (8a) gelagert ist.

10. Sicherheitsschalteranordnung (1) nach Anspruch 9, **dadurch gekennzeichnet, dass** das Kopplungsmittel (14) gegen die Federkräfte der Federn (13) kippbar ist.

11. Sicherheitsschalteranordnung (1) nach einem der Ansprüche 9 - 10, **dadurch gekennzeichnet, dass** der Grundkörper (8a) zwei gegenüberliegende in Abstand zueinander verlaufende Wände (10, 11) aufweist, wobei in einer ersten Wand (10) die Aussparung (17) vorgesehen ist und wobei auf der Innenseite einer zweiten Wand (11) die Federn (13) gelagert sind.

12. Sicherheitsschalteranordnung (1) nach einem der Ansprüche 5 - 11, **dadurch gekennzeichnet, dass** in einem über den Grundkörper (8a) hervorstehenden Abschnitts des Kopplungsmittels (14) der Transponder (7) gelagert ist.

13. Sicherheitsschalteranordnung (1) nach einem der Ansprüche 1 - 12, **dadurch gekennzeichnet, dass** das Kopplungsmittel (14) von einem Kunststoffteil gebildet ist.

14. Sicherheitsschalteranordnung (1) nach einem der Ansprüche 1 - 12, **dadurch gekennzeichnet, dass** das Kopplungsmittel (14) von einem Blechteil gebildet ist.

15. Sicherheitsschalteranordnung (1) nach Anspruch 14, **dadurch gekennzeichnet, dass** der über den Grundkörper (8a) hervorstehende Teil des Blechteils eine Ausnehmung ausbildet, welche zur Aufnahme (6) eines Kunststoffelements (18) ausgebildet ist, wobei der Transponder (7) im Bereich des Kunststoffelements (18) liegt.

## Claims

1. Safety circuit system (1) with a safety switch (2) having a reading unit (5) and an actuator (3, 8) which has a transponder (7) and a movably mounted actuating element (9), wherein signals are read from the transponder (7) by the reading unit (5) reads signals from the transponder (7) when the transponder (7) is located within a reading range of the reading unit (5), **characterised in that** the actuating element (9) is connected to the transponder (7) via a mechanical coupling means (14) of the actuator, so that a movement of the actuating element (9) is transmitted to the transponder (7), so that in a locking position of the actuating element (9), the transponder (7) is located within the reading range of the reading unit (5).

2. Safety circuit system (1) according to claim 1, **characterised in that** the coupling means (14) forms a rigid connection between the transponder (7) and the actuating element (9).

3. Safety circuit system (1) according to one of claims 1 or 2, **characterised in that** the transponder (7) and the actuating element (9) are fixedly connected to the coupling means (14).

4. Safety circuit system (1) according to one of claims 1-3, **characterised in that**, in the locked position, the actuating element (9) is retracted into a receptacle (6) of the safety switch (2).

5. Safety circuit system (1) according to one of claims 1-4, **characterised in that** the actuator (3, 8) has a base body (8a) in which the coupling means (14) is mounted in a positionally adjustable manner.

6. Safety circuit system (1) according to claim 5, **characterised in that** a recess (17) is provided in a wall (10, 11) of the base body (8a), through which the actuating element (9) is guided, wherein the actuating element (9) is guided with play in the recess (17).

7. Safety circuit system (1) according to one of claims 5 or 6, **characterised in that** the coupling means (14) is mounted so as to be displaceable and tiltable with the transponder (7) and the actuating element (9).

8. Safety circuit system (1) according to claims 6 and 7, **characterised in that** the displacement movement of the coupling means (14) is limited by the size of the recess (17).

9. Safety circuit system (1) according to any of claims 5-8, **characterised in that** the coupling means (14) is mounted on springs (13) in the base body (8a).

10. Safety circuit system (1) according to claim 9, **characterised in that** the coupling means (14) can be tilted against the spring forces of the springs (13).

11. Safety circuit system (1) according to one of claims 9-10. **characterised in that** the base body (8a) has two opposite walls (10, 11) extending at a distance from each other, wherein the recess (17) is provided in a first wall (10) and wherein the springs (13) are mounted on the inner side of a second wall (11).

12. Safety circuit system (1) according to one of claims 5-11, **characterised in that** the transponder (7) is mounted in a section of the coupling means (14) projecting beyond the base body (8a).

13. Safety circuit system (1) according to one of claims 1-12, **characterised in that** the coupling means (14) is formed by a plastic part.

14. Safety circuit system (1) according to one of claims 1-12, **characterised in that** the coupling means (14) is formed by a sheet metal part.

15. Safety circuit system (1) according to claim 14, **characterised in that** the part of the sheet metal part projecting beyond the base body (8a) forms a recess which is designed to receive (6) a plastic element (18), the transponder (7) being located in the region of the plastic element (18).

## Revendications

1. Agencement d'interrupteur de sécurité (1) comprenant un interrupteur de sécurité (2) comportant une unité de lecture (5) et un actionneur (3, 8) qui comporte un transpondeur (7) et un élément d'actionnement (9) monté de manière mobile, dans lequel des signaux sont lus par l'unité de lecture (5) lit des signaux provenant du transpondeur (7) lorsque le transpondeur (7) se trouve dans une zone de lecture de l'unité de lecture (5), **caractérisé en ce que** l'élément d'actionnement (9) est relié au transpondeur (7) par l'intermédiaire d'un moyen de couplage mécanique (14) de l'actionneur, de sorte qu'un mouvement de l'élément d'actionnement (9) est transmis au transpondeur (7), de sorte que, dans une position de verrouillage de l'élément d'actionnement (9), le transpondeur (7) se trouve à l'intérieur de la zone de lecture de l'unité de lecture (5).

2. Agencement d'interrupteur de sécurité (1) selon la revendication 1, **caractérisé en ce que** le moyen de couplage (14) forme une liaison rigide entre le transpondeur (7) et l'élément d'actionnement (9).

3. Agencement d'interrupteur de sécurité (1) selon l'une des revendications 1 ou 2, **caractérisé en ce que** le transpondeur (7) et l'élément d'actionnement (9) sont reliés de manière fixe au moyen de couplage (14).

4. Agencement d'interrupteur de sécurité (1) selon l'une des revendications 1 à 3, **caractérisé en ce que**, dans la position de verrouillage, l'élément d'actionnement (9) est rentré dans un logement (6) de l'interrupteur de sécurité (2).

5. Agencement d'interrupteur de sécurité (1) selon l'une des revendications 1 à 4, **caractérisé en ce que** l'actionneur (3, 8) comporte un corps de base (8a), dans lequel le moyen d'accouplement (14) est monté de manière à pouvoir être déplacé.

6. Agencement d'interrupteur de sécurité (1) selon la revendication 5, **caractérisé en ce qu'**un évidement (17) est prévu dans une paroi (10, 11) du corps de base (8a), à travers lequel passe l'élément d'actionnement (9), l'élément d'actionnement (9) étant guidé avec un jeu dans l'évidement (17).

7. Agencement d'interrupteur de sécurité (1) selon l'une des revendications 5 ou 6, **caractérisé en ce que** le moyen d'accouplement (14) est monté de manière à pouvoir être déplacé et basculé avec le transpondeur (7) et l'élément d'actionnement (9).

8. Agencement d'interrupteur de sécurité (1) selon les revendications 6 et 7, **caractérisé en ce que** le mouvement de déplacement du moyen de couplage (14) est limité par la taille de l'évidement (17).

9. Agencement d'interrupteur de sécurité (1) selon l'une des revendications 5 à 8, **caractérisé en ce que** le moyen de couplage (14) est monté sur des ressorts (13) dans le corps de base (8a).

10. Agencement d'interrupteur de sécurité (1) selon la revendication 9, **caractérisé en ce que** le moyen d'accouplement (14) peut basculer contre les forces élastiques des ressorts (13^.

11. Agencement d'interrupteur de sécurité (1) selon l'une des revendications 9 à 10. **caractérisé en ce que** le corps de base (8a) présente deux parois (10, 11) opposées et espacées l'une de l'autre, l'évidement (17) étant prévu dans une première paroi (10) et les ressorts (13) étant montés sur la face intérieure d'une seconde paroi (11).

12. Agencement d'interrupteur de sécurité (1) selon l'une des revendications 5 à 11, **caractérisé en ce que** le transpondeur (7) est logé dans une partie du moyen d'accouplement (14) qui dépasse du corps de base (8a).

13. Agencement d'interrupteur de sécurité (1) selon l'une des revendications 1 à 12, **caractérisé en ce que** le moyen d'accouplement (14) est formé par une pièce en matière plastique.

14. Agencement d'interrupteur de sécurité (1) selon l'une des revendications 1 à 12, **caractérisé en ce que** le moyen d'accouplement (14) est formé par une pièce en tôle.

15. Agencement d'interrupteur de sécurité (1) selon la revendication 14, **caractérisé en ce que** la partie de la pièce en tôle qui dépasse du corps de base (8a) forme un évidement qui est conçu pour recevoir (6) un élément en plastique (18), le transpondeur (7) se trouvant dans la zone de l'élément en plastique (18).
